(19)

Europäisches
Patentamt
European
Patent Office
Office européen
des brevets

(11) **EP 1 749 569 A1**

(12) **EUROPEAN PATENT APPLICATION**
published in accordance with Art. 158(3) EPC

(43) Date of publication:
**07.02.2007 Bulletin 2007/06**

(51) Int Cl.:
**B01J 19/12** (2006.01)     **C07B 61/00** (2006.01)

(21) Application number: **05734075.4**

(22) Date of filing: **19.04.2005**

(86) International application number:
**PCT/JP2005/007470**

(87) International publication number:
**WO 2005/102510 (03.11.2005 Gazette 2005/44)**

(84) Designated Contracting States:
**DE FR GB IT**

(30) Priority: **20.04.2004  JP 2004124745**

(71) Applicants:
- **Sanko Chemical Industry Co., Ltd.**
  **Kanagawa 253-0111 (JP)**
- **Shikoku Instrumentation Co., Ltd.**
  **Kagawa 764-8502 (JP)**
- **Yanagida, Shozo**
  **Hyogo 666-0133 (JP)**

(72) Inventors:
- **HORIKAWA, Sakae**
  **Kagawa 766-0012 (JP)**

- **SHIOTA, Hidekazu**
  **Marugeme-shi Kagawa 763-0093 (JP)**
- **ENOKIDA, Hirotaka**
  **kanagawa 253-0101 (JP)**
- **FUJIMOTO, Masaki**
  **Saitama 333-0811 (JP)**
- **NAKAMURA, Katsunori**
  **1411, Katsuse, Fujimi-shi Saitama 354-00 (JP)**

(74) Representative: **Gille Hrabal Struck Neidlein Prop Roos**
**Brucknerstrasse 20**
**40593 Düsseldorf (DE)**

(54) **CHEMICAL REACTION APPARATUS UTILIZING MICROWAVE**

(57)     The present invention relates to a microwave chemical reaction apparatus **characterized by** comprising a means for heating a reaction liquid, which is capable of irradiating microwaves while controlling the output power according to the temperature of the reaction liquid, together with a means for forcibly cooling the reaction liquid from the outside, and being capable of precisely controlling the reaction temperature. The microwave chemical reaction apparatus can control the reaction temperature precisely, for example, within ± 1°C of a predetermined temperature, and can be applied to fine chemical reactions. Further, since reactions proceed rapidly in such an apparatus, mass production can be achieved by a relatively small-sized reaction apparatus.

[Fig. 3]

Fig. 3

**Description**

Technical Field

The present invention relates to a chemical reaction apparatus using microwave as a heat source.

Background Art

Microwave is a region of electromagnetic wave, and a region from 0.3 to 30 GHz in frequency, namely from 1 cm to 1 m in wavelength, which is referred to as microwave, has been used in the fields of radar and communication devices. In addition, as seen in electronic oven for home use, it has been becoming widely used as a cooking apparatus and further in the fields of food processing, material drying, and the like. Further, since microwave is far weaker energy of electromagnetic wave compared with the energy of visible light and infrared rays, heretofore it has been mainly used widely in analytical applications for chemical substances such as nuclear magnetic resonance (NMR) in the chemical field. Recently, however, a trend to perform an organic chemical reaction using microwaves has been heightened. This reaction is one utilizing a phenomenon that electromagnetic energy of microwave is absorbed by a dielectric substance (a substance having an electric dipole) to be lost as heat (dielectric loss or dielectric heating), and preferably applied to, in particular, a reaction of an organic compound having an electric dipole. Since such organic compound absorbs microwave and is rapidly heated resulting in temperature rising, the reaction is significantly accelerated. As a result, in comparison with a case of the conventional external heating method, a time required for the reaction can be dramatically shortened, energy consumption can be reduced, and thereby a possibility to play a part of the global environment-friendly green chemistry has been heightened.

Examples of recent application thereof to an organic reaction include, for example, production of polyester resin shown in Patent Literature 1, production of copper phthalocyanine shown in Patent Literature 2, or the like.

However, these examples are not much more than those of laboratory level, and it is the current situation that a microwave chemical reaction apparatus capable of performing a reaction efficiently and in an industrial scale has not been developed yet.

Patent Literature 1: JP-A-2003-292594
Patent Literature 2: JP-A-2003-4544

Disclosure of Invention

Problem to be Solved by the Invention

Conventionally known microwave chemical reaction apparatuses include, for example, those described in Patent Literatures 1 and 2, but these apparatuses are merely experimental microwave chemical reaction apparatuses of batch system, and far from one capable of being applied to an industrial large scale production. Thus, development of a microwave chemical reaction apparatus capable of being applied to an industrial production is desired.

Means for Solving the Problem

When microwaves are irradiated to a reaction solution, microwaves are absorbed by the reaction liquid to generate heat. However, since many microwaves are absorbed in the first zone of the irradiated area, microwaves hardly reach deep in the reaction solution. In addition, in the case of a large sized reaction vessel, if the chemical reaction is an exothermal reaction, the reaction tends to run away due to difficulty in controlling temperature. Due to these reasons, mass production in an industrial scale using microwave irradiation has been considered to be difficult. Consequently, the present inventors thought that development of a reaction temperature controlling system is necessary for the application of the chemical reaction using microwave in an industrial scale. After intensively studying a way to solve the problem, the inventors have found that precise control of the reaction temperature can be realized by irradiating microwaves while controlling the output power depending on the temperature of the reaction solution, and simultaneously forcibly cooling the reaction liquid from the outside, that is, by conducting the reaction while simultaneously performing forcible heating with microwave and forcible cooling, and accomplished the present invention. According to the present invention, the reaction temperature can be precisely controlled without giving rise to a hunting phenomenon in which the temperature of the reaction liquid heaves up and down as seen in the conventional chemical reaction apparatus. More specifically, the chemical reaction apparatus of the present invention is capable of performing a continuous reaction by being provided with a microwave irradiation window which allows direct irradiation into the reaction vessel, a feed opening for raw material and a take out opening, separately from the feed opening for raw material, which allows taking out a reaction product. Further, the chemical reaction apparatus of the present invention is a system capable of performing a continuous reaction and a mass production with a comparatively small sized reaction vessel, for example, a reaction vessel having around 0.5 to 5 liter, preferably around 1 to 3 liter in effective internal volume, by continuously measuring a temperature of the reactant in the reaction vessel and automatically controlling the output power of microwaves according to a deviation thereof from the target preset temperature, as well as by comprising a means capable of forcibly cooling from the outside of the vessel allowing the reaction vessel being forcibly cooled from the outside, for example, a jacket or the like capable of forcibly circulating a liquid medium, etc., so that even in an exothermal reaction at a high temperature, the temperature of the reactant can be automatically maintained at a predetermined temperature precisely, for example, within ± 3°C, preferably within ± 2°C, and more preferably within ± 1°C.

Thus, the present invention relates to:

1. A microwave chemical reaction apparatus characterized by comprising a means for heating a reaction liquid, which is capable of irradiating microwaves while controlling the output power according to the temperature of the reaction liquid, together with a means for forcibly cooling the reaction liquid from the outside, and being capable of precisely controlling the reaction temperature;

2. The microwave chemical reaction apparatus according to the above item 6, characterized in that the means for forcibly cooling from the outside is performed with a liquid medium;

3. The microwave chemical reaction apparatus according to the above item 1 or 2, comprising: (1) a chemical reaction vessel provided with a feed opening for raw material for feeding a raw material, a take out opening separately provided from the feed opening for raw material through which the reaction product can be taken out, a temperature measuring means which measures a temperature of the reaction liquid continuously and connected in such a way that the measured temperature data can be transmitted to an output power controlling means for microwave as a signal, a stirring means capable of stirring a reactant in the vessel, a microwave irradiating window through which microwaves can be irradiated into the reaction vessel, and a means capable of forcibly cooling from the outside; and (2) a microwave generator provided with an output power controlling means for microwaves which is connected to said temperature measuring means and controls output power of microwaves according to a deviation between the temperature continuously measured by the measuring means and the target preset temperature so that the reaction temperature becomes close to said preset temperature, and a microwave waveguide which guides microwaves to said microwave irradiating window so that the reaction liquid in the chemical reaction vessel can be irradiated;

4. The microwave chemical reaction apparatus according to any one of the above items 1 to 3, wherein the chemical reaction vessel is provided with a first feed opening for raw material, a second feed opening for raw material different therefrom, and a preparatory vessel, which is connected to the feed opening for raw material so that raw material preliminarily treated in the preparatory vessel can be fed into the reaction vessel;

5. The microwave chemical reaction apparatus according to the above item 3 or 4, wherein plural said apparatus is connected by connecting a take out opening of a said apparatus and a feed opening for raw material of another microwave chemical reaction apparatus according to the above item 3, and further similarly connected to each other, as appropriate;

6. The microwave chemical reaction apparatus according to any one of the above items 1 to 5, characterized in that the chemical reaction vessel is provided with a means allowing forcibly circulating a liquid medium capable of heating, keeping warm, and cooling the vessel;

7. The microwave chemical reaction apparatus according to any one of the above items 1 to 6, characterized in that microwaves can be irradiated at an angle to the surface of the reaction liquid in the reaction vessel; and

8. A method of chemical reaction using microwaves, characterized in that a reaction is performed while the temperature of the reaction liquid is maintained correctly to a predetermined temperature by forcibly cooling the chemical reaction vessel from the outside and irradiating microwaves to the reaction liquid while controlling the output power according to the temperature of the reaction liquid so that the reaction temperature becomes close to the predetermined temperature.

Effect of the Invention

According to the present invention, since the reaction temperature can be precisely controlled without giving rise to the hunting phenomenon where the temperature of the reaction liquid heaves up and down as seen in the conventional chemical reaction apparatus, further, a reaction can be performed efficiently with a comparatively small-sized reaction apparatus, and still further, not only a batch-wise reaction but also a continuous reaction can be performed, the apparatus is capable of producing in an industrial scale even small-sized.

Brief Description of Drawings

[Fig. 1]

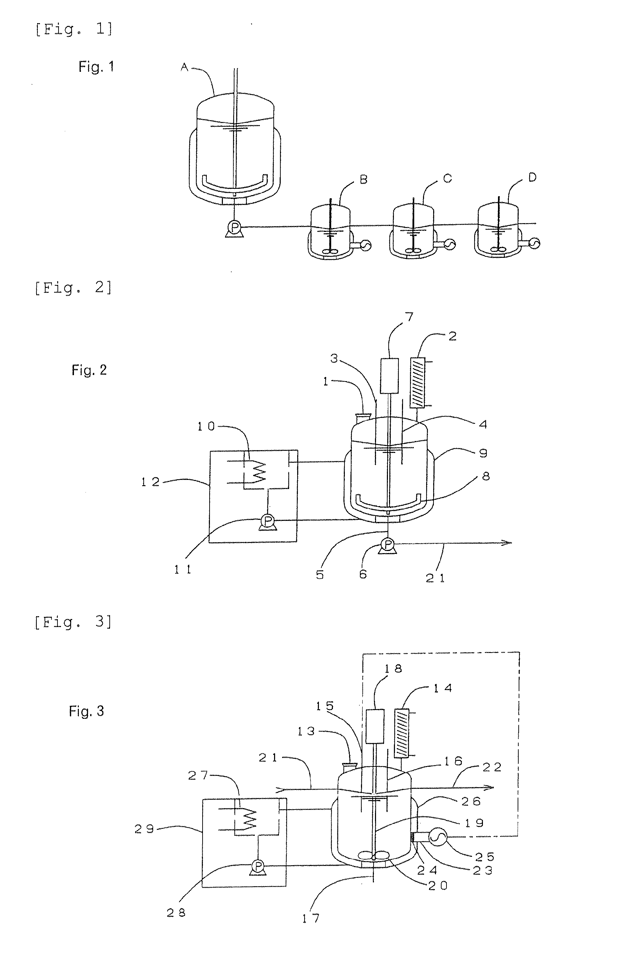

Fig. 1 shows an example of the microwave chemical reaction apparatus of the present invention, in which the first reaction vessel is provided with a preparatory vessel (dissolving or melting vessel) and 3 units of the microwave chemical reaction apparatuses are connected to each other so that 3 steps of continuous reactions can be performed.
[Fig. 2]
Fig. 2 shows a structure of an example of the preparatory vessel.
[Fig. 3]
Fig. 3 shows a structure of an example of a unit of the microwave chemical reaction apparatus of the present invention.
[Fig. 4]

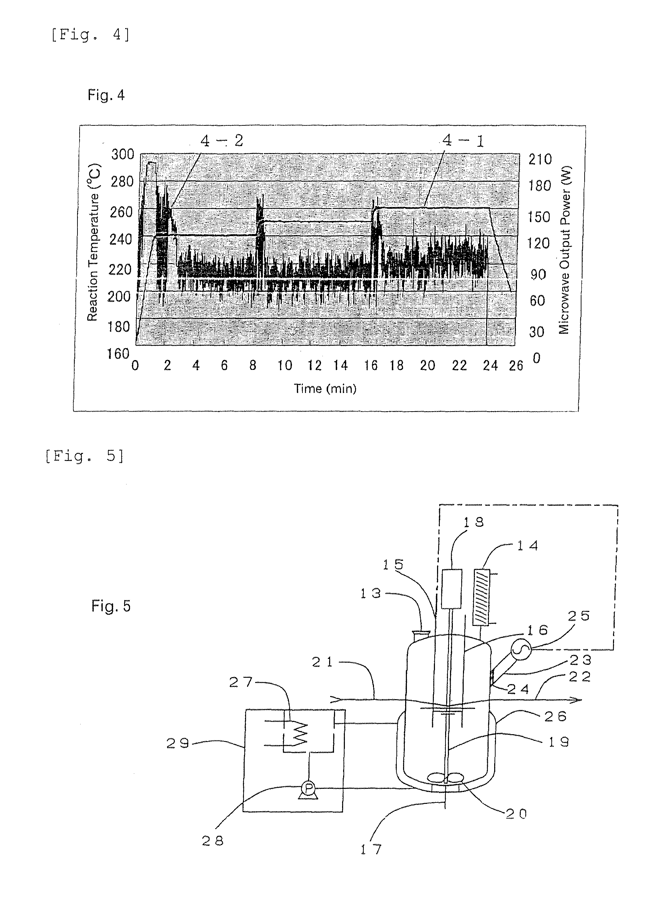

Fig. 4 shows states of variation of a microwave output power and control of the temperature of the reaction liquid.
[Fig. 5]
Fig. 5 shows a structure of an example of a unit of the microwave chemical reaction apparatus of the present invention where microwaves are irradiated at an angle.

Explanations of Letters or Numerals

A:      Preparatory vessel (dissolving or melting vessel);
B:      A unit of microwave chemical reaction apparatus;
C:      A unit of microwave chemical reaction apparatus;
D:      A unit of microwave chemical reaction apparatus;
1:      Feed opening for raw material (feed manhole);
2:      Condenser for condensing solvent vapor;
3:      Nozzle for inserting a temperature sensor;
4:      Nozzle for introducing an inert gas;
5:      Take out opening or nozzle for preliminarily treated raw material;
6:      Metering pump;
7:      Revolution variable motor;
8:      Stirring blade;
9:      Jacket circulating a heat transfer medium or cooling medium;
10:     Heater;
11:     Pump;
12:     Heat transfer or cooling medium circulating device;
13:     Feed opening for raw material (feed manhole);
14:     Condenser for condensing solvent vapor;
15:     Nozzle for inserting a temperature sensor;
16:     Nozzle for introducing an inert gas;
17:     Take out opening;
18:     Revolution variable motor;
19:     Revolving shaft;
20:     Stirring blade;
21:     Connecting tube;
22:     Connecting tube;
23:     Microwave waveguide;
24:     Microwave irradiation window;
25:     Microwave generator;
26:     Jacket circulating a heat transfer medium or cooling medium;
27:     Heater;
28:     Pump;
29:     Heat transfer or cooling medium circulating device;
4-1:    Variation of the reaction liquid temperature;
4-2:    Variation of the microwave output power.

Best Mode for Carrying Out the Invention

Hereinafter, the microwave chemical reaction apparatus of the present invention will be explained more in detail. The microwave chemical reaction apparatus of the present invention is a microwave chemical reaction apparatus characterized by comprising a means for heating a reaction liquid, which is capable of irradiating microwaves while controlling the output power according to the temperature of the reaction liquid, together with a means for forcibly cooling the reaction liquid from the outside, and being capable of precisely controlling the reaction temperature, and the apparatus is not particularly limited so long as both of the means can be performed simultaneously. The means for heating a reaction liquid capable of irradiating microwaves while controlling the output power according to the temperature of the reaction liquid includes, for example, an apparatus comprising a microwave generator provided with a temperature measuring means which is connected so as to be capable of continuously measuring the temperature of the reaction liquid and transferring the measured temperature data to a microwave output power controlling means as a signal, and the microwave output power controlling means which is connected to the above temperature measuring means and controls the output power of microwaves so that the reaction temperature becomes close to a target preset temperature according to a deviation between the temperature continuously measured by the temperature measuring means and the target preset temperature, and a waveguide capable of irradiating microwaves generated by the microwave generator to the reaction liquid. In this connection, microwaves from the microwave generator may be optionally irradiated directly without using the waveguide.

Further, the means capable of forcibly cooling the reaction liquid from the outside includes, for example, a means in which a heat transfer medium, for example, a liquid heat transfer medium is forcibly circulated in a container covering around the reaction vessel such as a jacket and a coil. The means capable of forcibly cooling from the outside preferably has a cooling capacity not less than the maximum heat generation value by the chemical reaction in the chemical reaction vessel. Chemical reaction can be performed while the temperature of the reaction liquid is correctly maintained at a predetermined temperature, by conducting the chemical reaction while simultaneously performing the forcible cooling from the outside with a capacity not less than the maximum heat generation value by the chemical reaction and the heating by irradiation of microwaves having a controlled output power so that the reaction temperature becomes close to the target preset temperature. Namely, the non-conventional precise control of the reaction temperature became possible by directly heating molecules with microwaves together with forcibly cooling in preference to the cooling in such a way to perform the forcible cooling with a capacity not less than the heat generation value by the reaction while compensating the shortfall in amount of heat by irradiating microwaves. In this connection, the term "forcibly cooling from the outside" in the present invention means to perform forcible cooling with a heat transfer medium (for example, a cooling medium, preferably a cooling medium in liquid form).

A more specific example includes, as described above, the microwave chemical reaction apparatus comprising: (1) a chemical reaction vessel provided with a feed opening for raw material for feeding a raw material, a take out opening separately provided from the feed opening for raw material through which the reaction product can be taken out, a temperature measuring means which measures the temperature of the reaction liquid continuously and connected in such a way that the measured temperature data can be transmitted to the output power controlling means for microwave as a signal, a stirring means capable of stirring a reactant in the vessel, a microwave irradiating window through which microwaves can be irradiated into the reaction vessel, and a means capable of forcibly cooling from the outside; and (2) a microwave generator provided with an output power controlling means for microwaves which is connected to said temperature measuring means and controls output power of microwaves according to a deviation between the temperature continuously measured by the measuring means and the target preset temperature so that the reaction temperature becomes close to the target preset temperature, and a microwave waveguide which guides microwaves to said microwave irradiating window so that the reaction liquid in the chemical reaction vessel can be irradiated.

The above apparatus will be explained more specifically. However, the following description is to explain an example specifically, and by no means to limit the present invention.

Location, number, etc. of the feed opening for raw material and the take out opening for reaction liquid are not particularly limited so long as they are provided to the reaction vessel so that the purposes thereof can be achieved, and the numbers of the feed opening for raw material and the take out opening may be plural, if necessary.

The feed opening for raw material may be single, but in view of the connection with the preparatory vessel, e. g. a vessel for dissolving raw material, as well as continuous reactions, as a preferable embodiment, the reaction vessel preferably has both of a first feed opening for raw material through which an initial raw material is fed into the reaction vessel (also referred to as feed manhole) and a second feed opening for raw material which allows to feed a raw material or a reaction liquid from the preparatory vessel or another reaction vessel. When plural raw materials are continuously and directly fed into the reaction vessel, the second feed opening for raw material may be provided in plural. Generally, the feed opening for raw material is located on the top section or an upper part of the side section of the reaction vessel. When the reaction vessel has both of the first and the second feed openings for raw materials, locations thereof are not particularly limited so long as the purposes thereof can be achieved, however, the first feed opening for raw material is located preferably on the top section of the reaction vessel, and the second feed opening for raw material is located preferably on any of the top section or the side section of the reaction vessel. When plural reaction vessels are used in conjunction with together by an overflow system, an upper part of the side section is more preferable. Further, when the feed opening for raw material is provided on the side section, the feed opening may be provided in any way of perpendicularly to the side surface, tangentially to the circumference of the side section, or the like, but tangential direction to the circumference of the side section is preferable from the viewpoint of mixing efficiency of the raw materials to be fed.

In the case of the reaction vessel used alone or the final reaction vessel when plural vessels are used in conjunction with together for a continuous reaction, the take out opening for the reaction liquid is not particularly limited so long as the reaction liquid can be taken out therefrom. However, in the case of the reaction vessel other than the final reaction vessel when plural vessels are used in conjunction with together, the take out opening is preferably capable of not only taking out the reaction liquid but also being connected to the feed opening for raw material of the next reaction vessel so that the reaction liquid can be fed as a raw material to the next reaction vessel. Generally, the take out opening is preferably provided on the top section or the side section. Further, in view of use in continuous system, the take out opening is preferably located apart from the feed opening for raw material to some extent. For example, if the feed opening is located in the tangential direction to the circumference of the side section on one side, the take out opening is preferably located in the tangential direction to the circumference of the side section on the opposing side thereto. In this connection, providing the feed opening or the take out opening in the tangential direction to circumference of the side section means that these openings are provided in the lateral direction to be elliptically so that the raw material to be fed is blasted out in the tangential direction to the circumference in the reaction vessel.

The temperature measuring means which is connected so as to be capable of continuously measuring the temperature of the reaction liquid in the reaction vessel and transferring the measured temperature data to a microwave output power controlling means as a signal is not particularly limited so long as the means is capable of measuring the temperature of the reaction liquid and transferring the temperature data to the output power control means as a signal of electricity or the like, and a thermometer such as infrared thermometer, optical fiber thermometer and thermocouple thermometer can be used. In the present invention, a thermometer capable of measuring directly the temperature of the reaction liquid, such as a thermocouple thermometer, an optical fiber thermometer and the like is preferable. Even in the case of a thermometer made of a material influenced by microwaves such as a thermocouple thermometer, the thermometer can be used if the reaction liquid has a sufficient absorbability to microwave.

The stirring means capable of stirring the reactant in the vessel includes any type of stirrer used for usual chemical reaction apparatus, however, a stirrer having as high efficiency as possible is preferable so that the temperature of the reaction liquid is made as uniform as possible even if microwaves are irradiated only in one side. Generally, a stirrer having a propeller type or a turbine type of stirring blade, which gives rise to a spiral vortex, is preferable. Stirring may be any type of stirring, but those not to arise unevenness in the temperature of the reaction liquid and to suck the reaction liquid in smoothly are preferable. Further, it is preferable to stir in such a way that stirring vortex of the reaction liquid becomes in counter-current direction against the feed opening for raw material in the circumference direction and in the sucking direction in the depth direction. A way of the stirrer to be fitted on is not particularly limited so long as the stirrer is fitted on the reaction vessel so as to be able to efficiently stir the reaction liquid. Generally, the stirrer is installed in the vicinity of the upper part at the center of the reaction vessel.

The microwave irradiation window capable of irradiating microwaves into the reaction vessel is not particularly limited so long as the reaction liquid can be irradiated with microwaves. Size, location or the like thereof may be selected as appropriate depending on the wavelength and output power of the microwaves. Further, the irradiation window may be plural, if necessary. Generally, the window is provided on the side surface, the top section or the like of the reaction vessel. When the microwave irradiation window is provided at the location where the window gets wet with the reaction liquid, it is necessary to prepare the window with a microwave-transparent material which does not absorb microwaves, and seal the window closely to stop the reaction liquid from leaking. The microwave-transparent material can include, for example, quartz glass plate, PTFE (polytetrafluoroethylene), or the like. The sealing material is preferably those resistant to high temperature, and includes, for example, gland packing made of PTFE, silica wool, or the like.

When the microwave irradiation window is provided on the top section of the reaction vessel, sealing is not necessarily required, but preferably the reaction vessel and the waveguide are divided off with the microwave-transparent material.

Direction of microwaves to be irradiated to the reaction liquid is not particularly limited, but preferably microwaves are irradiated from above the liquid surface of the reaction liquid at an angle to the liquid surface. Preferable irradiation angle depends on kind of the reaction liquid, etc. and cannot be categorically described, but the angle is generally around $10°$ to $85°$, preferably around $20°$ to $80°$, more preferably around $30°$ to $70°$, further more preferably around $40°$ to $65°$ in an angle from the vertical line to the liquid surface. Therefore, the waveguide to be connected to the irradiation window is preferably connected so that microwaves can be irradiated in such an angle to the liquid surface.

The microwave chemical reaction vessel of the present invention preferably has, besides the above-described functions, a preparatory vessel connected to the second feed opening for raw material. The preparatory vessel is for feeding a raw material into the reaction vessel after applying a preliminary treatment to the raw material so that the reaction in the reaction vessel proceeds smoothly, and preferable because the raw material can be fed continuously from the preparatory vessel into the reaction vessel in a continuous reaction. The preliminary treatment is not particularly limited, but generally includes treatments such as dissolving, mixing, heating, melting and degassing. The preparatory vessel may be generally provided with a feed opening for raw material and a take out opening for a preliminarily treated raw material which is connected to the feed opening for raw material of the above reaction vessel and capable of feeding the preliminarily treated raw material, and further optionally a means necessary for the preliminary treatment, for example, necessary devices such as a heating means capable of melting raw material when melting is required in the reaction, optionally cooling means, and stirring means, if necessary.

The heating means is not particularly limited so long as the means can achieve the purpose thereof. The heating means includes, for example, an external heating means by a heat transfer medium jacket or the like and/or a direct heating means by microwave irradiation.

Furthermore, the preparatory vessel may be provided with a condenser for condensing solvent vapor, a means for detecting temperature in the vessel, a nozzle for introducing an inert gas, a release hole for gas or the like, and a liquid conveying pump for sending smoothly a preliminarily treated raw material to the above reaction vessel in appropriate amount and timing (for example, a constant amount continuously, or a necessary amount according to need), or the like. The liquid conveying pump includes gear pump and MOHNO pump which have high accuracy in metering and are usable at a high temperature.

For instance, when a heat treatment is performed in the presence of a solvent, a condenser for condensing solvent vapor or the like is preferably provided. Further, when a melting treatment is performed, a means for detecting a temperature in the vessel is preferably provided. Still further, when a treatment under the oxygen absent atmosphere is desirable in a preliminary treatment, a nozzle for introducing an inert gas is preferably provided so that inside of the vessel can be replaced with an inert gas.

In the microwave chemical reaction vessel in the present invention, a material thereof is not particularly limited so long as the material does not bring about a problem to the reaction to be carried out therewith. Preferable materials for the reaction vessel generally include stainless-steel, polytetrafluoroethylene and quartz, which are heat resistant, corrosion resistant and of high strength.

Further, a jacket capable of heating, keeping warm, and cooling is preferably provided. The jacket is preferably one in which a liquid medium capable of heating, keeping warm, and cooling can be forcibly circulated. The liquid medium is not particularly limited, and any type can be used so long as the medium can be used as a heat transfer medium. When a high temperature heating with microwaves is required, the liquid medium is required to maintain a liquid form even at the temperature. Generally, the medium is preferably a liquid medium, which can be heated up to around 250°C, usually oils, and includes, for example, Barreltherm series (trade name, made by Matsumura Oil Co., Ltd.), KSK-Oil series (trade name, made by Soken Chemical & Engineering Co. , Ltd.), polyalkylene glycols such as tetraethylene glycol, and further silicone oils, and the like. Preferably the jacket generally covers the side surface up to a height of the reaction liquid in the reaction vessel and the bottom section thereof. The liquid medium in the jacket is preferably in direct contact with the outside of the reaction vessel so that thermal transfer to the reaction vessel can be performed directly. For instance, main roles of the jacket in a high temperature reaction is generally heating at the start-up of the reaction and cooling during the progression of the exothermal reaction. By installing the jacket, runaway of the exothermal reaction can be prevented and the reaction can be conducted safely. Further, in the case of the exothermic reaction and the like, by heating with microwaves while removing excess heat, a number of hot spots can be made to bring out the microwave effect.

The microwave chemical reaction vessel of the present invention may be further provided with a condenser for condensing solvent vapor, a nozzle for introducing an inert gas, a gas releasing hole, a take out opening for reaction liquid and the like, which are possessed by a usual industrial chemical reaction vessel, as appropriate, if necessary.

The microwave generator to be used in the present invention is not particularly limited so long as the generator can be used for an industrial purpose. However, the microwave generator is necessary to be provided with an output power controlling means for microwave, which can control the output power of microwaves so that the temperature of the reaction liquid becomes close to a target preset temperature according to a deviation between the temperature measured by the above temperature measuring means and the target preset temperature, and a microwave waveguide which can guide microwaves into the irradiation window of the chemical reaction vessel.

Maximum output power of the microwave generator is not particularly limited. Though the generator having a larger output power is more convenient because a reaction can be performed with more allowance, those having a maximum output power as appropriate depending on size of the reaction vessel, reaction temperature, and the like may be used from the viewpoint of economical efficiency such as cost. For example, for the case of around 0.5 to 5 liters of effective capacity, the maximum output power of the microwave generator is around 500 to 10, 000 W, and preferably 1,000 to 5,000 W.

A preferable example of the output power controlling means for microwave which controls output power of microwaves so that a temperature of the reaction liquid becomes close to a target preset temperature includes an output power control by PID (proportional - integral-derivative) operation of an automatic control system. Namely, the controlling means includes those by which an analogue signal received from the temperature measuring means is loaded on a temperature control device (thermo regulator), converted to digital signal, followed by PID (proportional - integral-derivative) operation on a deviation from the preset temperature to regulate the output power of microwaves. By such output power controlling system for microwaves, the oscillating energy of microwaves can be controlled more precisely and more finely. Thereby, the system can be operated with a less overshoot in temperature control, in a shorter settling time, and with a minimum deviance width between the preset temperature and the actual temperature, in comparison with the conventional heating method by heat transfer from the outside. Alternative output power control means includes ON-OFF control, proportional control, fuzzy control, or the like.

The microwave waveguide may be those made of a material, through which microwaves do not leak (for example, made of stainless-steel, made of aluminum, made of brass, etc.), and conventionally known waveguide can be used.

According to the microwave chemical reaction apparatus of the present invention, a reaction can be performed in a continuous system (cascade system) in which raw material is dissolved, and attainment levels of the reaction by microwave heating are set respectively in multi-steps, for example, a first step microwave reaction vessel, a second step microwave reaction vessel, and a third step microwave reaction vessel, to complete the reaction, and hence continuous operation of an organic synthesis chemical reaction is possible.

Further, in the microwave heating by the present reaction apparatus, since the chemical substance as a raw material is heated in molecular level by direct irradiation, heating temperature can be sharply controlled. Namely, heating operation can be controlled in a moment because irradiated microwave energy can be freely controlled.

Still further, since temperature rising time to a predetermined temperature and cooling time are significantly shorter compared to the conventional heating method by heat transfer from the outside using a heat transfer medium, and operation can be performed within a truly required reaction time, an excess heated state can be avoided and thereby side reaction or the like can be controlled.

Furthermore, the microwave heating by the present reaction vessel can be applied to a solvent-less reaction, because the chemical substance as a raw material is heated in molecular level by direct irradiation.

Type of chemical reaction is not particularly limited, but various chemical reactions such as (1) rearrangement reaction, (2) substitution reaction, (3) addition reaction, (4) cyclization reaction, (5) reduction reaction, (6) oxidation reaction, (7) racemization reaction, (8) cleavage reaction and deprotection reaction, (9) esterification reaction, and (10) modification reaction for synthetic resins or the like are adaptable.

Next, a preferable embodiment of the present invention will be more specifically explained.

As a preferable embodiment of the present invention, a case that a mixing, dissolving or melting vessel for raw material is provided as the preparatory vessel can be mentioned. This vessel is a preparative preparatory vessel to feed continuously raw material for reaction to the above reaction vessel, and preferably to feed to the above reaction vessel in a liquid form by homogeneously mixing, dissolving, or melting the raw material. This preparative preparatory vessel preferably has a heating means, for example, both or any one of an external heating means using a heat transfer medium (a jacket with a heating medium circulating therein, etc.) and a direct heating means by microwaves, to heat up the raw material for reaction. Further, since dissolving or melting of the raw material for reaction may be carried out without any solvent or in the presence of a suitable solvent, the preparative preparatory vessel can be equipped with a condenser for condensing solvent vapor. Furthermore, the vessel is preferably equipped with those selected as appropriate from or all of a nozzle for inserting a thermometer for detecting a temperature in the vessel, a nozzle for introducing an inert gas, a nozzle, a liquid conveying pump and the like for feeding continuously and quantitatively a raw material for reaction in a liquid form to the next microwave reaction vessel.

The microwave chemical reaction apparatus of the present invention can be used alone, but is preferably used by connecting with the preparatory vessel.

The chemical reaction vessel to be used in the present invention receives a raw material for reaction in a liquid form fed from the above preparatory vessel, for example, continuously and quantitatively, from the feed opening for raw material of the reaction vessel through a connecting tube. The fed raw material is subjected to a desired chemical reaction by irradiation of microwaves, and the reaction product is taken out continuously from the take out opening. When a continuous reaction is carried out, the reaction product taken out is further fed to the next reaction vessel to further proceed with the reaction. A means for this transfer is not particularly limited, and a preferable method is that the reaction product is discharged through a connecting tube attached to the take out opening of the first reaction vessel in a form of over-flow. In a preferable embodiment, each of the connecting tubes at the feed opening for raw material and the take out opening is openly connected to the reaction vessel along the tangential direction to the internal circumference of the reaction vessel and horizontally.

In a reaction, the feed opening for raw material and the take out opening for reaction liquid in the reaction vessel are desirably located at the furthermost positions from each other in the three-dimensional space including stirring in the vessel. Consequently, the feed opening for raw material and the take out opening for reaction liquid are openly located along the tangential direction to the internal circumference and in parallel positions in the reaction vessel. By locating the openings in such a way and stirring the reaction liquid in the countercurrent direction to the feed opening for raw material, the raw material for reaction flowing from the feed opening for raw material into the reaction vessel is discharged in the countercurrent direction against the stirring flow, then mixed and diffused in the reaction vessel by an eddy toward the depth direction, stays a certain residence time in the vessel, thereafter flows out from the take out opening for reaction liquid in a form of an overflow. Consequently, an unreacted raw material flowed in from the feed opening for raw material is prevented from flowing out directly from the take out opening for reaction liquid by a shortcut. This stirring in the reaction vessel is carried out preferably in such a way that stirring eddy of the reaction liquid is formed in a countercurrent direction against the nozzle of connecting tube at the feed opening for raw material for the circumference direction and in sucking-in direction for the depth direction. Shape of the stirring blade is preferably a propeller type or a turbine type, which generate a spiral vortex.

As a heat source of the reaction vessel, microwaves generated by the microwave generator are directly irradiated from the waveguide to the raw material for reaction in the reaction vessel, through the irradiation window provided, for example, at the side wall or the top section of the reaction vessel, preferably from above at an angle, thereby the raw material is heated up in molecular level resulting in temperature rise of the whole reaction system. Since control of the irradiation energy is carried out by PID control while correlating to a temperature of the reaction liquid, microwave irradiation can be controlled delicately, and the temperature of the reaction liquid can be correctly controlled at the preset temperature.

At the same time, the chemical reaction by the microwave irradiation proceeds in a very short period of time. In the case when the selected chemical reaction is an exothermal reaction, even when the microwave irradiation is turned off, the reaction naturally proceeds by self-heating, and leads to a risk of runaway of the reaction in the worst case. Therefore, the reaction is necessary to be cooled down before reaching the critical region. Accordingly, the reaction vessel is preferably provided with a jacket capable of circulating a liquid medium so as to be cooled down. By sending a cooling medium set at a predetermined temperature from a separately installed cooling medium circulating equipment to the jacket, the microwave reaction can be proceeded within a safety temperature region due to a heat transfer cooling from the jacket. By conducting the reaction in such a way, a temperature difference from a preset temperature can be controlled within $\pm3°C$, preferably $\pm2°C$, and more preferably $\pm1°C$, even in the case of the exothermal reaction. Further, since this organic chemical reaction by microwaves is carried out without any solvent or in the presence of a suitable solvent, the microwave reaction vessel may be equipped with a condenser for condensing solvent vapor. The microwave reaction vessel constitutes one unit, and in the practice of a selected chemical reaction, the unit can be used alone or plural units can be used in conjunction with together. Capacity of the reaction vessel in each unit may be same or different from each other.

Hereinafter, the present invention will be further explained based on Examples illustrated in the drawings.

Example 1

Fig. 1 shows a schematic diagram of a microwave chemical reaction apparatus, which is an example of the reaction apparatus of the present invention, provided with a preparatory vessel and capable of performing a continuous reaction consisting of 3 steps.

The reaction apparatus is consisted of: a preparatory vessel (A) (hereinafter, also expediently referred to as a raw material dissolving vessel) for mixing, heating, dissolving, or melting a raw material for reaction (hereinafter, also expediently referred to as a reaction substrate); a chemical reaction vessel for carrying out the first step reaction (hereinafter, also expediently referred to as a microwave reaction vessel) (B); then a microwave reaction vessel (C) having a role to carry out a large part of the reaction as the second step; and further a microwave reaction vessel (D) to complete the reaction as the third step.

Hereinafter, a case that 3,3'-diallyl-4,4'-dihydroxyphenylsulfone (abbreviated name: AHPS) is prepared from 4,4'-diallyloxydiphenylsulfone (abbreviated name: AOPS) by the Claisen rearrangement reaction will be explained as an example.

The reaction substrate (AOPS) is heated and melted in the raw material dissolving vessel (A), and flows into the first step microwave reaction vessel (B) quantitatively and continuously via a metering pump.

In the first step microwave reaction step vessel (B), the reaction substrate (AOPS) is heated and rised the temperature rising by subjecting to the microwave irradiation, and maintained at a first step reaction temperature (for example, 240°C) to proceed with the reaction to about 20 to 50%, preferably nearly 40% of the whole reaction, and thereafter flows into the second microwave reaction vessel (C) by overflowing.

The reaction substrate (AOPS) flowed into the second microwave reaction vessel (C) is further heated and rised the temperature rising by subjecting to the microwave irradiation, and maintained at a second reaction temperature (for example, 250°C) to proceed with the reaction to around 65 to 95%, preferably 90% of the whole reaction by the activation of reaction, and thereafter flows into the third microwave reaction vessel (D) by overflowing.

The reaction substrate containing 35 to 5%, preferably about 10% of unreacted AOPS flowed into the third microwave reaction vessel (D) is similarly heated and rised the temperature by subjecting to the microwave irradiation, and maintained at a third reaction temperature (for example, 260°C) to complete nearly 100% of the reaction and to be converted to the reaction product (AHPS), and thereafter discharged out of the reaction vessel quantitatively and continuously by overflowing.

A time required for producing, for example, around 1 to 2 kg of the desired AHPS from AOPS, by using the reaction apparatus of the present invention, for example, a reaction vessel having around 1.5 liters of effective capacity is around 10 minutes.

Fig. 2 shows a structure of the above raw material dissolving vessel (A).

The raw material dissolving vessel (A) consists of a heat resistant and corrosion resistant vessel made of a high strength stainless-steel or a corrosion resistant material, and is provided in the upper part with a feed opening for raw material (also referred to as feed manhole) (1), a condenser for condensing solvent vapor (2), a nozzle for inserting a temperature sensor (3) and a nozzle for introducing an inert gas (4), and in the lower part, a nozzle capable of continuously and quantitatively taking out the reaction substrate preliminarily treated such as dissolving (take out opening for preliminarily treated raw material) (5) and a metering pump (6). The line from the nozzle (5) via the metering pump (6) to the connecting tube (21) is provided with a mechanism capable of heating and keeping warm, for example, by a ribbon heater to prevent a raw material to be sent from coagulation or crystallization. Further, in the inside of the vessel, a motor whose revolution is variable (revolution variable motor) (7) and stirring blades rotationally driven via rotating shaft (8) are provided. Furthermore, on the outer circumference in the lower part of the vessel body, a jacket (9) capable of circulating a heat transfer medium or a cooling medium is provided, and to this jacket (9), a heat transfer and cooling medium circulating equipment (12) equipped with a heater (10) and a pump (11), etc. is connected, and by this heat transfer and cooling medium circulating equipment (12), temperature-controlled heat transfer or cooling medium is circulated through the jacket (9).

Fig. 3 shows a structure of the microwave reaction vessel (common for B, C and D). The above microwave reaction vessel (common for B, C and D) consists of a heat resistant and corrosion resistant vessel (B, C, D) made of a high strength stainless steel or a corrosion resistant material, and is provided in the upper part with a feed manhole (13), a condenser for condensing solvent vapor (14), a nozzle for inserting a temperature sensor (15), and a nozzle for introducing an inert gas (16), and in the lower part, a nozzle (take out opening) (17) capable of taking out the reaction substrate in emergency or in changeover and washing.

In the inside thereof, a revolution variable motor (18) and stirring blades (20) rotationally driven via rotating shaft (19) are provided.

In the intermediate part of the vessel, a connecting tube (21) for receiving a raw substrate from the raw material dissolving vessel (A) and a connecting tube (22) for transferring a reaction liquid from the microwave reaction vessel (B, C, D) to the next reaction vessel are provided in opposing positions from each other.

Further, in the upper part or the body section of the vessel, a microwave waveguide (23) for irradiating microwaves directly to the reaction substrate in the vessel is provided.

An end of the waveguide (23) is connected to the microwave irradiation window (24) provided in the upper part or the body section of the vessel. When the irradiation window (24) is located at the portion wetted by the reaction substrate in the vessel, the window is covered with a material through which microwaves can transmit such as quartz glass, PTFE, Teflon resin and the like, and sealed off to prevent the reaction liquid from leaking.

The microwave waveguide (23) is connected to the microwave generator (25), and the microwave generator (25) controls an output power of microwave so as to maintain the reaction liquid at a preset temperature, while detecting a variation of temperature in the vessel by the temperature sensor (15). In this connection, in the present Example, a microwave generator having an output power of 1.5 kw and 2.45 GHz of frequency was used.

Furthermore, on the outer circumference in the lower part of the vessel body, a jacket (26) capable of circulating a heat transfer medium or a cooling medium is provided, and to this jacket (26), a heat transfer and cooling medium circulating equipment (29) equipped with a heater (27) and a pump (28), etc. is connected, and by this heat transfer and cooling medium circulating equipment (29), temperature-controlled heat transfer or cooling medium is circulated through the jacket (26).

Actual internal capacity of the microwave reaction vessel (B, C, D) is preferably the same capacity each other based on the levels of the connecting tubes (21) and (22).

Before starting the above continuous reaction, the following preparations were carried out.

A prescribed amount of powdery raw material, 4,4'-diallyloxydiphenylsulfone (AOPS), was charged into the raw material dissolving vessel (A) through the manhole, and AOPS was melted by increasing the temperature in the vessel up to the temperature higher than the melting point of AOPS (150°C), preferably 160 to 180°C by circulating a heat transfer medium in the jacket. Subsequently, inside of the vessel was replaced with nitrogen by introducing nitrogen into the vessel from a nitrogen bomb while being stirred to keep the inside in an oxygen-free state. At the same time, the nozzle for taking out (5), the metering pump (6) and the connecting tube (21) line of the microwave reaction vessel were kept warm in advance at a temperature of 160°C to 180°C, which is suitable for sending the liquid.

Into each of the microwave reaction vessels (B, C, D), a prescribed amount of powdery product, 3,3'-diallyl-4,4'-dihydroxydiphenylsulfone (AHPS), was charged through each manhole, and heated up to the reaction temperature for each microwave reaction vessel, that is, 240°C for the microwave reaction vessel (B), 250°C for the microwave reaction vessel (C), and 260°C for the microwave reaction vessel (D), by irradiating microwaves and circulating a heat transfer medium into the jackets, while stirring the product in each vessel, because AHPS has the melting point of 150°C and melts, and keeping the inside of each vessel in an oxygen-free state by replacing with nitrogen similarly as in the case of the raw material dissolving vessel (A).

At the same time, the connecting tube sections to connect each reaction vessel were maintained at a temperature not lower than 150°C, preferably in a range from 200°C to 260°C, for example, at 240°C, 250°C and 260°C, respectively, to prevent the reaction liquid from coagulation or crystallization.

After the above preparations were completed, feed rate of the metering pump (6) adjunct to the raw material dissolving vessel (A) was set before starting the pump, and continuously fed the melted raw material, AOPS, to the microwave reaction vessels to carry out the rearrangement reaction.

Set value for the feed rate of the metering pump was calculated by the following formula.

$$[L/min] = \text{Effective volume of microwave reaction vessel } [L] / 7 \text{ min}$$

Namely, the rearrangement reaction was carried out continuously by operating at a residence time in each microwave reaction vessel set at 7 minutes.

In the present study, internal temperatures of the microwave reaction vessels were maintained at the following temperatures:

first microwave reaction vessel (B): 240°C;
second microwave reaction vessel (C): 250°C;
third microwave reaction vessel (D): 260°C; to obtain the product with product yield 100% and product quality 92.6% (purity by a liquid chromatography, hereinafter, referred to as LC purity).

Data for achievement of the reaction in each of the first microwave reaction vessel, the second microwave reaction vessel and the third microwave reaction vessel are shown in Table 1. The analytical value shows an analytical value of the unreacted raw material at each exit, respectively.

[Table 1]

| Table 1, Unreacted AOPS at the exit of each reaction vessel | | | |
|---|---|---|---|
| | First reaction vessel | Second reaction vessel | Third reaction vessel |
| Content of unreacted AOPS in the reaction liquid | 58.31% | 7.74% | N.D. |

Example 2

A continuous reaction was carried out using 3 units (B, C, D) of the microwave reaction vessels (effective volume 1.5 liters each) shown in Fig. 5, which were connected each other as shown in Fig. 1.

Before starting the continuous reaction, the following preparations were carried out.

A prescribed amount of powdery raw material, 4, 4'-diallyloxydiphenylsulfone (AOPS), was charged into the raw material dissolving vessel (A) through the manhole, and AOPS was melted by increasing the temperature in the vessel up to 160 to 180°C, which is not lower than the melting point of AOPS (145°C) by circulating a heat transfer medium in the jacket. Subsequently, inside of the vessel was replaced with nitrogen to be oxygen-free, while being stirred. At the same time, the nozzle for taking out (5), the metering pump (6), the connecting tube (21) line of the microwave reaction vessel and the microwave reaction vessels (B, C, D) were preheated in advance at a temperature of 160°C to 180°C, which is suitable for sending the liquid, and kept at the same temperature. Preheating of the microwave reaction vessels (B, C, D) were carried out by circulating a heat transfer medium (180 to 190°C) in the jackets.

Further, similarly as in the case of the raw material dissolving vessel (A), line and inside of the reaction vessels were replaced with nitrogen, and kept in an oxygen-free state.

Thereafter, the melted raw material, AOPS, was continuously fed to the microwave reaction vessels (B, C, D) with the metering pump to fill up all of the reaction vessels with the melted raw material, AOPS, and moreover was subjected to overflow. Irradiation of microwaves was started while the heat transfer medium in the jackets was kept circulated. The reaction liquid in each reaction vessel (B, C, D) was heated up to the prescribed 250°C, and afterwards the continuous reaction was carried on in this state. The reaction liquid overflowed from the final microwave reaction vessel (D) was sampled with time until the reaction was confirmed to be in a steady state by liquid chromatography analysis. Temperature of the reaction liquid was, after reaching the predetermined temperature, 250°C, kept controlled within a range of 250°C ± 1°C.

Further, when the same reaction was carried out by changing the reaction temperature to 260°C, the reaction temperature was also kept controlled within a range of 260°C ± 1°C. As an example of data after reaching the steady state, data for achievement of the rearrangement reaction after 60 minutes from reaching the preset temperatures (250°C and 260°C) are shown in Table 2.

[Table 2]

| Table 2, Data for achievement of the rearrangement reaction | | |
|---|---|---|
| Reaction temperature (°C) | 250 | 260 |
| Feed rate of raw material (ml/min) | 200 | 200 |
| Average residence time per vessel (min) | 7.5 | 7.5 |
| Yield (%) | 100% | 100% |
| Purity of product (LC purity: area %) | 84.1 | 88.1 |

Example 3

A batch-wise reaction was carried out using one unit of the microwave reaction vessel (B) shown in Fig. 5 connected to the raw material dissolving vessel (A).

Before starting the batch-wise reaction, melting of AOPS, preheating, and replacement with nitrogen were carried out similarly as in Example 2.

After the preparative works were completed, 1.0 kg of the melted raw material, AOPS, was charged into the microwave reaction vessel (B), and inside of the vessel was kept in an oxygen-free state by introducing nitrogen into the vessel. Subsequently, microwaves were irradiated while circulating the heat transfer medium (160°C to 190°C) in the jacket. During the batch-wise reaction was carried out, an internal temperature of the reaction vessel was increased at a rate of 8°C/min in the region from 160°C to 240°C by programmed temperature rising, at a rate of 1°C/min in the region from 240°C to 260°C by programmed temperature rising, then kept at 260°C for 3 minutes. After completion of the reaction, the take out valve at the bottom of the reaction vessel was released to take out the reaction liquid for sampling and liquid chromatography analysis. The results are shown in Table 3.

In this connection, in Examples 1 to 3, a microwave generator having a maximum output power of 1,500 W was used.

[Table 3]

Table 3

| Feed amount of AOPS (kg) | 1.0 |
|---|---|
| Temperature of heat transfer medium (initial/during reaction) (°C) | 160 / 190 |
| Initial internal temperature (°C) | 160 |
| Programmed temperature rising up to 240°C | 8°C/min |
| Programmed temperature rising 240 - 260°C | 1°C/min |
| Stay at 260°C | 3 min |
| Yield (%) | 100% |
| Purity of product (LC purity: area %) | 93.4% |

Industrial Applicability

According to the microwave chemical reaction apparatus of the present invention, since the reaction temperature can be precisely controlled without giving rise to the hunting phenomenon where the temperature of the reaction liquid heaves up and down as seen in the conventional chemical reaction apparatus, and also reaction rate is rapid, a reaction can be performed efficiently with a comparatively small-sized reaction apparatus. Further, since not only a batch-wise reaction but also a continuous reaction can be performed, the apparatus is, even a small-sized, capable of producing in an industrial scale, and therefore utilization in the field of the fine chemical reaction and the like can be expected.

**Claims**

1. A microwave chemical reaction apparatus **characterized by** comprising a means for heating a reaction liquid, which is capable of irradiating microwaves while controlling the output power according to the temperature of the reaction liquid, together with a means for forcibly cooling the reaction liquid from the outside, and being capable of precisely controlling the reaction temperature.

2. The microwave chemical reaction apparatus according to claim 2, **characterized in that** the means for forcibly cooling from the outside is performed with a liquid medium.

3. The microwave chemical reaction apparatus according to claim 1, comprising: (1) a chemical reaction vessel provided with a feed opening for raw material for feeding a raw material, a take out opening separately provided from the feed opening for raw material through which the reaction product can be taken out, a temperature measuring means which measures a temperature of the reaction liquid continuously and connected in such a way that the measured temperature data can be transmitted to an output power controlling means for microwave as a signal, a stirring means capable of stirring a reactant in the vessel, a microwave irradiating window through which microwaves can be irradiated into the reaction vessel, and a means capable of forcibly cooling from the outside; and (2) a microwave generator provided with an output power controlling means for microwaves which is connected to said temperature measuring means and controls output power of microwaves according to a deviation between the temperature continuously measured by the measuring means and the target preset temperature so that the reaction temperature becomes close to said preset temperature, and a microwave waveguide which guides microwaves to said microwave irradiating window so that the reaction liquid in the chemical reaction vessel can be irradiated.

4. The microwave chemical reaction apparatus according to claim 3, wherein the chemical reaction vessel is provided with a first feed opening for raw material, a second feed opening for raw material different therefrom, and a preparatory vessel which is connected to the feed opening for raw material so that raw material preliminarily treated in the preparatory vessel can be fed into the reaction vessel.

5. The microwave chemical reaction apparatus according to claim 3, wherein plural said apparatus is connected by connecting a take out opening of said apparatus and a feed opening for raw material of another microwave chemical reaction apparatus according to claim 3, and further similarly connected to each other, as appropriate.

6. The microwave chemical reaction apparatus according to claim 3, **characterized in that** the chemical reaction vessel is provided with a means allowing forcibly circulating a liquid medium capable of heating, keeping warm, and cooling the vessel.

7. The microwave chemical reaction apparatus according to claim 3, **characterized in that** microwaves can be irradiated at an angle to the surface of reaction liquid in the reaction vessel.

8. A method of chemical reaction using microwaves, **characterized in that** a reaction is performed while the temperature of the reaction liquid is maintained correctly to a predetermined temperature by forcibly cooling the chemical reaction vessel from the outside and irradiating microwaves to the reaction liquid while controlling the output power according to the temperature of the reaction liquid so that the reaction temperature becomes to the predetermined temperature.

[Fig. 1]

Fig. 1

[Fig. 2]

Fig. 2

[Fig. 3]

Fig. 3

[Fig. 4]

Fig. 4

[Fig. 5]

Fig. 5

## INTERNATIONAL SEARCH REPORT

| International application No. |
| --- |
| PCT/JP2005/007470 |

**A. CLASSIFICATION OF SUBJECT MATTER**
Int.Cl$^7$ B01J19/12, C07B61/00

According to International Patent Classification (IPC) or to both national classification and IPC

**B. FIELDS SEARCHED**

Minimum documentation searched (classification system followed by classification symbols)
Int.Cl$^7$ B01J19/12, C07B61/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2-198626 A (Tsukishima Kikai Co., Ltd.), 07 August, 1990 (07.08.90), Fig. 1; page 3, upper right column to page 4, upper left column (Family: none) | 1-8 |
| A | JP 59-45929 A (Toshiba Corp.), 15 March, 1984 (15.03.84), Fig. 1; page 1, lower right column to page 2, upper left column (Family: none) | 1-8 |
| P,X | US 2005/0045625 A1 (CEM CORP. Matthews, NC), 03 March, 2005 (03.03.05), Fig. 1; Par. Nos. [0028] to [0031] & JP 2005-95887 A | 1-3,8 |

☐ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>19 July, 2005 (19.07.05) | Date of mailing of the international search report<br>02 August, 2005 (02.08.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003292594 A

- JP 2003004544 A